(19) Europäisches Patentamt

European Patent Office

Office européen des brevets

(11) **EP 1 273 782 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.⁷: **F02D 41/24**

(21) Anmeldenummer: **02022273.3**

(22) Anmeldetag: **22.03.1999**

(54) **Verfahren zur Bestimmung von Kennfelddaten zur Kennfeldsteuerung eines Verbrennungsmotors sowie Verfahren zur Steuerung eines Verbrennungsmotors**

Method for determining characteristic mapping data for controlling the characteristic map of an internal combustion engine, and a method for controlling an internal combustion engine

Procédé pour la détermination de données de diagramme caractéristique pour la définition des réseaux de caractéristiques d'un moteur à combustion interne, ainsi que procédé pour la commande d'un moteur à combustion interne

(84) Benannte Vertragsstaaten:
**AT DE ES FR GB IT PT SE**

(30) Priorität: **30.04.1998 DE 19819445**

(43) Veröffentlichungstag der Anmeldung:
**08.01.2003 Patentblatt 2003/02**

(62) Dokumentnummer(n) der früheren Anmeldung(en) nach Art. 76 EPÜ:
**99916846.1 / 1 075 594**

(73) Patentinhaber: **Volkswagen Aktiengesellschaft**
**38436 Wolfsburg (DE)**

(72) Erfinder:
• **Waschatz, Uwe**
**38527 Meine (DE)**
• **Heinrich, Axel**
**38527 Meine (DE)**

(74) Vertreter: **Banzer, Hans-Jörg, Dipl.-Ing. et al**
**Kraus & Weisert**
**Patent- und Rechtsanwälte**
**Thomas-Wimmer-Ring 15**
**80539 München (DE)**

(56) Entgegenhaltungen:
| | |
|---|---|
| **EP-A- 0 301 548** | **EP-A- 0 387 008** |
| **EP-A- 0 391 573** | **EP-A- 0 814 391** |
| **DE-A- 19 514 423** | **DE-A- 19 725 149** |
| **US-A- 5 629 481** | |

**Beschreibung**

Die vorliegende Erfindung betrifft ein Verfahren zur Bestimmung von einem oder mehreren Parametern für eine oder mehrere mathematische Funktionen zur Steuerung eines Verbrennungsmotors nach dem Oberbegriff des Anspruchs 1. Ein derartiges Verfahren ist aus der EP 0 391 573 A2 bekannt.

Es sind Verfahren und Vorrichtungen in Gestalt elektronischer Motorsteuergeräte zur Steuerung von Verbrennungsmotoren bekannt, bei denen mittels Sensoren ein oder mehrere Einflußfaktoren, die den Betrieb des Verbrennungsmotors beeinflussen, gemessen und über Eingangskanäle dem Motorsteuergerät zugeführt werden. Das Motorsteuergerät verfügt über mindestens eine Speichereinheit, in der in Gestalt eines sogenannten Kennfeldes für eine Vielzahl möglicher Werte dieser Einflußfaktoren Ausgangswerte für eine oder mehrere Zielgrößen gespeichert sind. Eine Rechen- und Datenverarbeitungseinheit in dem elektronischen Motorsteuergerät wählt aus den in der Speichereinheit gespeicherten Werten des Kennfeldes diejenigen Ausgangswerte aus, die den gemeldeten Werten der Einflußfaktoren zugeordnet sind. Diese Ausgangswerte für Zielgrößen werden von der Rechen- und Datenverarbeitungseinheit über einen oder mehrere Ausgangskanäle ausgegeben und beeinflussen den Arbeitszustand des zu steuernden Verbrennungsmotors.

Einflußfaktoren dieser geschilderten sog. kennfeldgesteuerten elektronischen Motorsteuergeräte sind z.B. Drehzahl, Lambda-Wert, Last, Lufttemperatur, Kühlwassertemperatur oder Öltemperatur. Zielgrößen sind in modemen elektronischen Motorsteuergeräten im allgemeinen das Drehmoment, die Katalysatortemperatur sowie die Abgastemperatur.

Moderne elektronische Motorsteuergeräte enthalten oftmals nicht nur ein Kennfeld, sondern mehrere Kennfelder, die beispielsweise je nach gewünschter Fahrweise oder Umgebungsbedingungen ausgewählt werden. Z. B. kann im Steuerprogramm des Motorsteuergerätes vorgesehen sein, daß während der Warmlaufphase des Motors ein Kennfeld A benutzt wird, während in der normalen Betriebsphase des Motors ein anderes Kennfeld B benutzt wird. Außerdem werden bei modernen elektronischen Motorsteuergeräten im Bemühen um weitere Verbesserungen bei Kraftstoffverbrauch, Laufruhe und Schadstoffemission immer mehr Einflußfaktoren erfaßt und für die Bestimmung des jeweiligen Kennfeld-Ausgangswertes herangezogen, so daß die in der bzw. den Speichereinheiten moderner elektronischer Motorsteuergeräte abzuspeichernden Kennfeldwerte ständig zunehmen. Die großen Kennfelder bedingen eine entsprechend hohe Speicherkapazität in den elektronischen Motorsteuergeräten. Da elektronische Motorsteuergeräte im Vergleich zu stationären elektronischen Speicher- und Recheneinheiten in rauhen Umgebungsbedingungen, nämlich unter enormer Temperatur-, Schwingungs- und Stoßbelastung arbeiten und bei ihnen über Jahre hinweg ein störungsfreier Betrieb gewährleistet sein muß, sind die verwendeten Speichereinheiten der elektronischen Motorsteuergeräte im Vergleich zu sonstigen elektronischen Speichereinheiten sehr kostspielig. Durch die hohen Anforderungen an die Speicherkapazität werden die elektronischen Motorsteuergeräte daher stark verteuert.

Es ist bereits ansatzweise versucht worden, die üblicherweise erforderliche große Speicherkapazität für die Speichereinheiten der elektronischen Motorsteuergeräte zu reduzieren. Die DE-OS 195 14 423 schlägt dazu ein Verfahren und eine Vorrichtung zur Erfassung des in einen Zylinder eines Verbrennungsmotors geführten Luftstromes vor, die so gestaltet sind, daß sie die Anzahl der Umdrehungen des Motors ermitteln, den Druck eines Ansaugrohres eines Motors ermitteln und den in einen Zylinder des Motors geführten Luftstrom $Qc$ berechnen, und zwar auf der Basis der Anzahl der Umdrehungen und des Druckes des Ansaugrohres gemäß einem linearen Ausdruck $Qc = \alpha * P + \beta$. Das Speichervolumen des benötigten Datenspeichers zur Speicherung der auf die Unterdruckwerte und die Motordrehzahlwerte bezogenen Korrekturen des volumetrischen Wirkungsgrades des Verbrennungsmotors wird dadurch im Vergleich zu demjenigen des ansonsten benötigten zweidimensionalen Kennfeldes verringert.

Jeder im Motorsteuerkennfeld eines elektronischen Motorsteuergerätes gespeicherte Wert wird zuvor experimentell in Testläufen an einem Testmotor auf einem Antriebsprüfstand gemessen. Modeme elektrische Motorsteuergeräte besitzen mehrdimensionale Kennfelder mit insgesamt tausenden oder zehntausenden verschiedener Werte, so daß sich für jeden zu vermessenden Motor-Getriebe-Typ entsprechend lange Meßzeiten auf einem Antriebsprüfstand zur Erfassung der für die Kennfelderstellung benötigten Meßwerte ergeben. Bei manuellem Prüfstandbetrieb betragen die Prüfstandzeiten üblicherweise Wochen bis Monate, und das für jeden einzelnen Motor-Getriebe-Typ.

Aus den Artikeln "Automatische Motormanagement-Abstimmung" von Franz Thomas Kampelmühler, erschienen in ATZ/MTZ Sonderheft Motor und Umwelt 1992, und "Verkürzung der Entwicklungszeiten für moderne Antriebe durch VEGA" von Jürgen Bredenbeck, Gerald Fehl und Hans-Peter Dohmen, erschienen in ATZ/MTZ Sonderausgabe System Partners 1997, sind Optimierungsstrategien für einen weitgehend automatisierten Meßablauf für Antriebsprüfstände zur Ermittlung der Kennfeldparameter bekannt. Diese optimierten Meßkonzepte erreichen durch ihre weitgehende Automatisierung zwar eine beträchtliche Verkürzung der Meßzeiten sowie eine deutliche Verringerung des Personalaufwandes; das Problem einer Vielzahl zu erfassender Meßwerte, die bis zu mehreren tausend oder zehntausend Meßwerten gehen können, wird dadurch aber nicht beseitigt. Besonders deutlich wird dies in dem letztgenannten Artikel von Jürgen Bredenbeck, Gerald Fehl und Hans-Peter Dohmen, die bei einem Einsatz ihres automatisierten VEGA-Verfahrens zwar eine Reduktion des benötigten Personalaufwands gegenüber einer rein manuellen Prüfstandeinstellung und -erfassung der Meßwerte von 97 % angeben; die benötigte Prüfstandslaufzeit reduziert sich allerdings im Vergleich dazu nur um 43 %, so daß weiterhin eine beträchtliche Prüfstandslaufzeit notwendig bleibt.

Es besteht die Aufgabe, ein Verfahren zur Bestimmung von einem oder mehreren Parametern für eine oder mehrere mathematische Funktionen zur Steuerung eines Verbrennungsmotors derart zu verbessern, daß die bisher benötigten langen Meßzeiten auf Antriebsprüfständen reduziert werden.

Die Aufgabe wird durch ein Verfahren mit den Merkmalen des Anspruchs 1 gelöst. Die grundlegende Idee besteht darin, nicht mehr jeden für das Motorsteuerkennfeld benötigten Zielgrößen-Meßwert durch Einstellung der entsprechenden Einflußfaktoren des Motors auf dem Antriebsprüfstand einzeln zu erfassen und aufzunehmen, sondern aus einer deutlich geringeren Anzahl aufgenommener Meßwerte mittels an sich bekannter numerischer, insbesondere statistischer Auswerte- und Berechnungsverfahren die übrigen Werte zu bestimmen. Es wird dadurch eine ganz beträchtliche Verringerung der Anzahl der benötigten Meßwerte und damit eine ganz beträchtliche Verkürzung der benötigten Prüfstands-Meßzeit erreicht. Insbesondere in Verbindung mit den oben genannten, an sich bekannten Automatisierungsverfahren zur eigentlichen Kennfeldwertmessung kann dann nicht nur der benötigte Personalaufwand, sondern die gesamte zur Messung auf dem Antriebsprüfstand benötigte Zeit beträchtlich verkürzt werden.

Die Bedeutung der erfindungsgemäßen Lösung mit den Merkmalen des Verfahrens gemäß Anspruch 1 soll anhand eines konkreten Zahlenbeispiels kurz dargestellt werden. Enthält ein Motorsteuergerät insgesamt 5 Motorsteuerkennfelder für 5 verschiedene Betriebszustände des Antriebs, und werden (bei 3 Zielgrößen) in jedem dieser 5 Steuerkennfelder 9 Einflußfaktoren mit jeweils 100 Meßpunkten berücksichtigt, so enthält das Motorsteuergerät insgesamt $5 * (9 + 3) * 100 = 6000$ Kennwerte. Das bedeutet, daß zur Ermittlung dieser 6000 Kennwerte entsprechend mindestens 6000 Meßwerte an $5 * 9 * 100 = 4500$ Arbeitspunkten auf einem Antriebsprüfstand aufgenommen werden müssen. Durch die erfindungsgemäße Lösung gemäß Anspruch 1 bzw. Anspruch 2 sei es nun beispielsweise möglich, für jeden der 9 Einflußfaktoren mit 3 Meßwerten pro Einflußfaktor zur Bestimmung der jeweiligen Parameter der jeweiligen mathematischen Funktion für jede der 3 Zielgrößen auszukommen. Dann müssen entsprechend lediglich $5 * (9 + 3) * 3 = 180$ Meßwerte an $5 * 9 * 3 = 135$ Arbeitspunkten auf dem Antriebsprüfstand aufgenommen werden. Die Ersparnis an Meßaufwand und -zeit ist ersichtlich beträchtlich.

Die abhängigen Ansprüche 2 bis 18 definieren bevorzugte Ausführungsbeispiele des Verfahrens.

Die zweitgenannte Aufgabe wird durch ein Verfahren mit den Merkmalen des Anspruchs 19 sowie durch ein elektronisches Motorsteuergerät mit den Merkmalen des Anspruchs 20 gelöst. Die grundlegende Idee besteht darin, nicht mehr jeden einzelnen Kennfeldmeßwert im elektronischen Motorsteuergerät abzuspeichern, sondern dort lediglich die Parameter der mathematischen Funktionen, die die Abhängigkeit der verschiedenen Zielgrößen von den Einflußfaktoren anhand der nach einem der Ansprüche 1 bis 18 bestimmten Parameter beschreiben, abzulegen. Die Einsparung an benötigter Speicherkapazität des Motorsteuergerätes ist, wie insbesondere anhand des Ausführungsbeispiels deutlich werden wird, beträchtlich. Auf diese Weise kann eine deutliche Verbilligung des Motorsteuergerätes erreicht werden.

Die mit dem erfindungsgemäßen Verfahren gewonnenen Parameter können zur Steuerung eines Verbrennungsmotors verwendet werden, wobei statt des Auslesens eines in einer Look-up-Kennfeldwerttabelle gespeicherten Kennfeldwertes in Abhängigkeit von mindestens einem Eingangswert statt dessen der bzw. die Ausgangswerte zur Steuerung des Verbrennungsmotors anhand der im Motorsteuergerät gespeicherten Funktion(en) in Abhängigkeit von mindestens einem Eingangswert jeweils berechnet werden. Die dafür im Steuergerät benötigte Rechen- und Datenverarbeitungskapazität steht bei modernen elektronischen Motorsteuergeräten ohnehin zur Verfügung, da auch bei diesen ständig diverse Rechenoperationen notwendig sind. Beispielsweise kann in einem konventionell gestalteten Kennfeld selbst bei einer hohen Anzahl von Kennfeldwerten nicht für genau jeden gemeldeten, einen Einflußfaktor repräsentierenden Eingangswert ein entsprechender Kennfeldtabelleneintrag vorhanden sein. Dazwischenliegende Werte werden üblicherweise durch Interpolation zwischen gespeicherten Kennfeldtabellenwerten berechnet. Die bei einem derartigen Motorsteuergerät notwendigen Rechenoperationen zur Berechnung des Zielgrößen-Funktionswertes anhand der im Motorsteuergerät gespeicherten Funktionen-Parameter für die Einflußfaktoren sind nicht aufwendiger als die bekannten Interpolationsrechnungen im Stand der Technik.

Die Erfindung wird im folgenden modellhaft anhand eines einfachen Ausführungsbeispiels dargestellt, wobei das Ausführungsbeispiel anhand der folgenden beigefügten Abbildungen näher erläutert wird:

Abbildung 1: Einfluß der Arbeitspunkte auf die Modellbildung;

Abbildung 2: Abhängigkeiten der Ruß- und Stickoxidemissionen RUSSZ bzw. NOx von Einspritzbeginn SB, Ladedruck PL und Lufttemperatur im Saugrohr TL;

Abbildung 3: Resultat unterschiedlicher Modellansätze für das Stickoxidemissions-Modell bei Berücksichtigung von 21 Funktionstermen;

Abbildung 4:     Wirkung der Haupteinflußfaktoren auf die Stickoxidemessionen NOx, mit 95 % Vertrauensintervall;

Abbildung 5:     Einfluß der Modellfunktionsterme auf die Stickoxidemession NOx;

Abbildung 6:     Stickoxidemession NOx in Abhängigkeit vom Kraftstoffeinspritzbeginn SB und Ladedruck PL, mit 95 % Vertrauensintervall;

Abbildung 7:     berechnetes Kennfeld für den Kraftstoffdurchsatz KRSTDS, die Stickoxid- und die Rußemissionen NOx bzw. RUSSZ in Abhängigkeit vom Ladedruck PL und Einspritzbeginn SB;

Abbildung 8:     zusammenfassende schematische Darstellung des Prinzips der erfinderischen Lösung einer beschleunigten Kennfeldwert- und Parameterwertermittlung.

Im folgenden wird nunmehr ein Versuchsablauf zur Bestimmung von mehreren Parametern mathematischer Funktionen zur Steuerung eines Diesel-Verbrennungsmotors geschildert. Der Dieselmotor ist mit direkter Kraftstoffeinspritzung und einem Abgasturbolader mit Ladeluftkühler und variabler Turbinengeometrie und daher variablem mittlerem Ladedruck PL ausgerüstet. Die Versuchsmessungen laufen auf einem an sich bekannten Antriebsprüfstand ab.

Die Messungen sind zur Beantwortung der Frage geplant, wie sich die experimentell kontrollierbaren Einflußfaktoren Abgasrückführrate AGR, mittlerer Ladedruck PL und Kraftstoffeinspritzbeginn SB auf die Zielgrößen Kraftstoffverbrauch (Kraftstoffdurchsatz) KRSTDS, Rußemessionen (Rußzahl) RUSSZ und Stickoxidemessionen NOx auswirken. Zur Vereinfachung der Versuchsbedingungen sollen die Motordrehzahl DRZ bei konstant DRZ = 2000 min$^{-1}$, der Ladedruck PL bei konstant PL = 2 bar sowie das Drehmoment MD bei konstant MD = 30 Nm gehalten werden. Zusätzlich wird als weiterer, experimentell nicht kontrollierbarer Einflußfaktor die Lufttemperatur im Saugrohr vor dem Einlaßventil TL gemessen. Darüber hinaus wird außerdem die Lufttemperatur am Ausgang des Ladeluftkühlers TLAD als vielleicht mögliche weitere, experimentell nicht kontrollierbare Einflußgröße mit erfaßt .

Vor Versuchsbeginn wird festgelegt, daß für die kontrollierbaren Einflußfaktoren im Versuch folgende Werte eingestellt werden sollen, die sich aus der nachfolgenden Tabelle 1 ergeben.

Tabelle 1:

| Liste der vor Versuchsbeginn im Modellansatz berücksichtigten Einflußfaktoren | | | |
|---|---|---|---|
| Faktor | Abkürzung | Werte | Einheit |
| Kraftstoffeinspritzbeginn | SB | -15, -13, -11, -9, -7, -5, -3 | Kurbelwinkelgrade (°KW) vor oberem Totpunkt |
| mittlerer Ladedruck | PL | 1050, 1080, 1120, 1150 | mbar |
| Stellsignal für Abgasrückführungsventil | AGR | keine, gering, mittel, viel, maximal | |
| Lufttemperatur vor dem Einflußventil | TL | unkontrolliert | °C |

Es sollen somit für den Kraftstoffeinspritzbeginn SB 7 mögliche Werte, für den mittleren Ladedruck PL 4 mögliche Werte und für das Stellsignal des Abgasrückführungsventils 5 mögliche Stufen eingestellt werden. Es konnte vor dem Versuch keine klare Auskunft darüber gegeben werden, wie das Stellsignal für das Abgasrückführungsventil einzustellen ist, um eine definierte Abgasrückführungsrate AGR zu erhalten. Aus diesem Grunde wurden zunächst die qualitativen Angaben "keine, gering, mittel, viel, maximal" gewählt. Während der Messungen wurde für jedes der 5 möglichen Stellsignale für das Abgasrückführungsventil die sich experimentell ergebende Abgasrückführungsrate AGR gemessen, so daß nach Abschluß der Messungen den qualitativen Angaben für das Stellsignal des Abgasrückführungsvendis eine quantitative Abgasrückführrate AGR zugeordnet werden konnte. Diese quantitative Abgasrückführungsrate AGR wird anschließend der Auswertung der Messungen zugrundegelegt. Diese Vorgehensweise ist möglich, sie erhöht lediglich den erforderlichen Meßaufwand, da nun bei der Festlegung der Arbeitspunkte im Arbeitsplan für die Messungen alle 5 möglichen Stufen des Stellsignals des Abgasrückführungsventils berücksichtigt werden müssen, um entsprechende quantitative Abgasrückführungsraten AGR zu gewinnen.

Wie bereits vor Versuchsbeginn vermutet wurde, hat die Temperatur der Luft im Saugrohr vor dem Einlaßventil TL tatsächlich - wie sich dann zeigte - einen nicht vernachlässigbaren Einfluß auf die Zielgrößen. Da sie andererseits aber im Versuch nicht exakt vorgegeben werden kann, wird sie bereits vor Versuchsbeginn im Modellansatz als Einflußfaktor berücksichtigt, der aber nicht experimentell kontrollierbar ist. Auf diese Weise werden die Temperatureinflüsse TL in den Modellansatz für den Versuchsmotor mit einbezogen.

Die 3 experimentell kontrollierbaren Einflußfaktoren Kraftstoffeinspritzbeginn SB, Ladedruck PL und Abgasrückführrate AGR erzeugen einen Werteraum mit 3 Dimensionen und $7 * 4 * 5 = 140$ Wertepunkten. Beim bekannten Stand der Technik hätten alle diese 140 Wertepunkte einzeln als Arbeitspunkte auf dem Antriebsprüfstand angefahren und durchgemessen werden müssen. Statt dessen gilt es erfindungsgemäß, aus diesen 140 möglichen Wertepunkten wesentliche Punkte als Arbeitspunkte für die Messungen auf dem Antriebsprüfstand auszuwählen.

Grundsätzlich gilt, daß bei dieser Auswahl der Arbeitspunkte die verschiedenen möglichen Werte der verschiedenen Einflußfaktoren möglichst gleichmäßig berücksichtigt werden sollten, um eine im wesentlichen gleichmäßige Verteilung der Arbeitspunkte im Werteraum zu erreichen. Eine übermäßige Massierung von Arbeitspunkten in einem bestimmten Gebiet des zur Verfügung stehenden Werteraums fördert Fehler und Ungenauigkeiten bei der statistischen Auswertung der erhaltenen Meßdaten an den Arbeitspunkten. Außerdem gilt, daß man Extremwerte, d. h. möglichst kleine und möglichst große Werte der Einflußfaktoren, bevorzugt in die Messungen mit einbeziehen wird, da bekanntermaßen interpolationsverfahren zwischen zwei Wertepunkten üblicherweise mit geringeren numerischen Fehlern und Streuungen behaftet sind als Extrapolationsverfahren.

Die Auswahl von Wertepunkten als Arbeitspunkte für die durchzuführenden Messungen kann unter Berücksichtigung dieser Maximen von Hand geschehen, sie kann aber auch einer universellen Meßplanungs-, Datenanalyse und -auswertungssoftware überlassen werden. Im Ausführungsbeispiel kamen dazu die kommerziell erhältlichen, universellen Meßplanungs-, datenanalyse und -auswertungssoftwarewerkzeuge RS/1 Discover und RS/1 Explore zum Einsatz.

Als unabdingbare Voraussetzung bei der Auswahl der Arbeitspunkte muß lediglich berücksichtigt werden, daß die Anzahl der aufzunehmenden Meßwerte mindestens gleich der maximalen Anzahl der in einer verwendeten Zielgrößenfunktion vorkommenden Parameter ist. Für die drei Zielgrößen Kraftstoffverbrauch KRSTDS, Rußemession RUSSZ und Stickoxidemession NOx wurde als mathematischer Modellansatz jeweils ein quadratisches Polynom gewählt. Bei 4 Variablen (nämlich den 3 kontrollierbaren Einflußfaktoren Abgasrückführung AGR, Ladedruck PL und Kraftstoffeinspritzbeginn SB sowie dem nicht kontrollierbaren Einflußfaktor Lufttemperatur vor dem Einlaßventil TL) bedeutet dies unter Berücksichtigung der linearen und quadratischen Terme sowie aller einfachen Produkte ein Modell mit 15 Funktionstermen entsprechend der Tabelle 2.

| 1 | SB | PL | AGR | TL | SB*PL | SB*AGR | SB*TL | PL*TL | PL*AGR | AGR*TL |
|---|----|----|-----|----|-------|--------|-------|-------|--------|--------|
| $SB^2$ | $PL^2$ | $AGR^2$ | $TL^2$ | | | | | | | |

*Tabelle 2: Die 15 Modellterme*

Die der Auswertung der Ergebnisse gemäß vorangehender Versuchsplanung zugrundeliegende Formel lautet somit für die Stickoxidemissionen NOx:

$$NOx = a_0 + a_{SB} * SB + a_{PL} * PL + a_{AGR} * AGR + a_{TL} * TL + a_{SB.PL} * SB * PL$$

$$+ a_{SB.AGR} * SB * AGR + a_{PL.AGR} * PL * AGR + a_{TL.SB} * TL * SB$$

$$+ a_{TL.PL} * TL * PL + a_{TL.AGR} * TL * AGR + a_{SB^2} * SB^2 + a_{PL^2} * PL^2$$

$$+ a_{AGR^2} * AGR^2 + a_{TL^2} * TL^2 ;$$

für die Russemissionen (Russzahl) RUSSZ:

$$RUSSZ = b_0 + b_{SB} * SB + b_{PL} * PL + b_{AGR} * AGR + b_{TL} * TL + b_{SB.PL} * SB * PL$$

$$+ b_{SB.AGR} * SB * AGR + b_{PL.AGR} * PL * AGR + b_{TL.SB} * TL * SB$$

$$+ b_{TL.PL} * TL * PL + b_{TL.AGR} * TL * AGR + b_{SB^2} * SB^2 + b_{PL^2} * PL^2$$

$$+ b_{AGR^2} * AGR^2 + b_{TL^2} * TL^2$$

und für den Kraftstoffverbrauch (Kraftstoffdurchsatz) KRSTDS:

$$KRSTDS = c_0 + c_{SB} * SB + c_{PL} * PL + C_{AGR} * AGR + c_{TL} * TL + c_{SB.PL} * SB * PL$$

$$+ C_{SB.AGR} * SB * AGR + C_{PL.AGR} * PL * AGR + C_{TL.SB} * TL * SB$$

$$+ C_{TL.PL} * TL * PL + C_{TL.AGR} * TL * AGR + C_{SB^2} * SB^2 + C_{PL^2} * PL^2$$

$$+ C_{AGR^2} * AGR^2 + C_{TL^2} * TL^2$$

Da gemäß Modellansatz jede der drei zu bestimmenden Zielgrößenfunktionen jeweils 15 Parameter enthält, die drei Zielgrößen Kraftstoffverbrauch KRSTDS, Rußemission RUSSZ und Stickoxidemession NOx aber gemäß Modellansatz als voneinander unabhängig angenommen sind, genügen grundsätzlich 15 Arbeitspunkte zur Bestimmung der $3 * 15 = 45$ Parameter $a_x$, $b_x$ und $c_x$, sofern an jedem der 15 Arbeitspunkte jeweils Meßwerte für alle vier oben angegebenen Einflußfaktoren sowie Meßwerte für alle drei Zielgrößen (also insgesamt $15 * [4 + 3] = 105$ Meßwerte) gemessen werden. Die 45 Parameter $a_x$, $b_x$ und $c_x$ könnten dann mittels an sich bekannter numerischer Methoden der Linearen Algebra (Auflösung eines linearen Gleichungssystems) aus den Meßwerten bestimmt werden.

Wegen der zunächst lediglich qualitativen Vorgabe der Einstellwerte für das Abgasrückführungsventil müssen aber für die Abgasrückführungsrate AGR alle 5 möglichen Einstellstufen berücksichtigt werden. Außerdem ist es wünschenswert, mehr Arbeitspunkte als zur Berechnung der Parameter unbedingt notwendig festzulegen, um auf diese Weise bei der Auswertung der Meßergebnisse statistische Ausgleichsverfahren anwenden zu können und so die Genauigkeit der Ergebnisse zu erhöhen. Es wird daher für die Messungen ein Arbeitsplan mit 23 Arbeitspunkten gemäß folgender Tabelle 3 festgelegt.

Tabelle 3:

| Arbeitsplan für Motordrehzahl DRZ = 2000 min⁻¹ und Ladedruck PL = 2 bar | | | |
|---|---|---|---|
| Arbeitspunkt | Einspritzbeginn SB | Ladedruck PL | AGR-Rate AGR |
| Nr. | $\underline{o}$KW | mbar | |
| 1 | -15 | 1150 | viel |
| 2 | -15 | 1050 | keine |
| 3 | -15 | 1050 | mittel |
| 4 | -3 | 1050 | mittel |
| 5 | -3 | 1080 | gering |
| 6 | -15 | 1150 | keine |
| 7 | -3 | 1120 | maximal |
| 8 | -3 | 1050 | viel |
| 9 | -3 | 1050 | maximal |
| 10 | -15 | 1150 | mittel |
| 11 | -3 | 1150 | viel |
| 12 | -3 | 1150 | mittel |
| 13 | -15 | 1050 | gering |
| 14 | -9 | 1080 | viel |
| 15 | -15 | 1150 | maximal |
| 16 | -3 | 1150 | gering |
| 17 | -15 | 1050 | viel |
| 18 | -15 | 1150 | gering |
| 19 | -7 | 1150 | maximal |

Tabelle 3:   (fortgesetzt)

| Arbeitsplan für Motordrehzahl DRZ = 2000 min$^{-1}$ und Ladedruck PL = 2 bar | | | |
|---|---|---|---|
| Arbeitspunkt | Einspritzbeginn SB | Ladedruck PL | AGR-Rate AGR |
| Nr. | $\underline{o}$KW | mbar | |
| 20 | -3 | 1150 | keine |
| 21 | -15 | 1050 | maximal |
| 22 | -7 | 1050 | gering |
| 23 | -3 | 1050 | keine |

Anschließend werden gemäß des Arbeitsplanes die verschiedenen Einstellwerte gemäß den 23 Arbeitspunkten für die kontrollierbaren Einflußfaktoren in an sich bekannter Weise am Antriebsprüfstand eingestellt. Die tatsächlich am Prüfstand eingestellten und gemessenen Werte der kontrollierbaren und nicht kontrollierbaren Einflußfaktoren sind in der Tabelle 4 zusammengefaßt

EP 1 273 782 B1

Tabelle 4:

| Am Prüfstand gemessene Werte der Einflußfaktoren | | | | | | | | |
|---|---|---|---|---|---|---|---|---|
| Arbeitspunkt | Einspritzbeginn SB | Ladedruck PL | AGR-Rate AGR | AGR-Rate AGR | Lufttemperatur am Ladeluftkühlerausgang TLAD | Lufttemperatur vor dem Einlaßventil TL | Drehzahl DRZ | Drehmoment MD |
| Nr. | °KW | mbar | | % | °C | °C | min$^{-1}$ | Nm |
| 1 | -15 | 1150 | viel | 50 | 35.07 | 47.22 | 2000 | 29.2 |
| 2 | -15 | 1050 | keine | 80 | 36.41 | 40.59 | 2000 | 30.6 |
| 3 | -15 | 1050 | mittel | 60 | 34.1 | 38.65 | 2000 | 31.5 |
| 4 | -3 | 1050 | mittel | 60 | 33.16 | 38.24 | 2000 | 30.2 |
| 5 | -3 | 1080 | gering | 70 | 33.63 | 38.61 | 2000 | 30.8 |
| 6 | -15 | 1150 | keine | 80 | 36.62 | 39.54 | 2000 | 30.8 |
| 7 | -3 | 1120 | maximal | 40 | 36.12 | 65.31 | 2000 | 28.8 |
| 8 | -3 | 1050 | viel | 50 | 35.9 | 51.62 | 1999 | 30.9 |
| 9 | -3 | 1050 | maximal | 40 | 34.01 | 57.73 | 1999 | 30.4 |
| 10 | -15 | 1150 | mittel | 60 | 36.99 | 42.99 | 2000 | 30.7 |
| 11 | -3 | 1150 | viel | 50 | 37.79 | 46.08 | 2003 | 30.2 |
| 12 | -3 | 1150 | mittel | 60 | 38.81 | 42.9 | 2004 | 30.7 |
| 13 | -15 | 1050 | gering | 75 | 34.89 | 39.2 | 2004 | 29.6 |
| 14 | -9 | 1080 | viel | 51 | 34.42 | 40.88 | 2004 | 30.8 |
| 15 | -15 | 1115 | maximal | 40 | 35.27 | 74.17 | 2004 | 29.5 |
| 16 | -3 | 1150 | gering | 70 | 38.03 | 42.82 | 2003 | 29.2 |
| 17 | -15 | 1050 | viel | 50 | 36.54 | 43.16 | 2003 | 31.3 |
| 18 | -15 | 1147 | gering | 70 | 38.21 | 40.5 | 2003 | 30.5 |
| 19 | -7 | 1118 | maximal | 40 | 36.94 | 75.11 | 2003 | 29.5 |
| 20 | -3 | 1150 | keine | 80 | 39.32 | 42.38 | 2004 | 30.5 |
| 21 | -15 | 1054 | maximal | 40 | 36.42 | 60.13 | 2003 | 30.4 |

Tabelle 4: (fortgesetzt)

| Am Prüfstand gemessene Werte der Einflußfaktoren | | | | | | | | |
|---|---|---|---|---|---|---|---|---|
| Arbeitspunkt | Einspritzbeginn SB | Ladedruck PL | AGR-Rate AGR | AGR-Rate AGR | Lufttemperatur am Ladeluftkühlerausgang TLAD | Lufttemperatur vor dem Einlaßventil TL | Drehzahl DRZ | Drehmoment MD |
| Nr. | °KW | mbar | | % | °C | °C | min$^{-1}$ | Nm |
| 22 | -7 | 1050 | gering | 70 | 35.86 | 40.83 | 2003 | 30.1 |
| 23 | -3 | 1053 | keine | 80 | 35.2 | 39.84 | 2003 | 29.8 |

Nach Abschluß der Messungen werden den qualitativen Begriffen für das Stellsignal des Abgasrückführungsventits quantitative Abgasrückführungsraten AGR zugeordnet. Die Zuordnung ist aus Tabelle 4 ersichtlich.

Aus der Tabelle 4 wird weiterhin deutlich, daß der mittlere Ladedruck PL nicht an allen Arbeitspunkten entsprechend der Vorgabe des Arbeitsplanes (nämlich konstant bei PL = 2 bar) eingestellt werden konnte - vergleiche z. B. die Arbeitspunkte Nr. 15 und Nr. 19. Dieses ist aber für die weitere Analyse nicht kritisch. Wichtig ist lediglich, daß die weitere Analyse und Auswertung nur mit den tatsächlich eingestellten Daten für den Ladedruck PL durchgeführt wird und nicht mit den zuvor geplanten.

Die Ergebnisse der Tabelle 4 zeigen außerdem, daß nicht nur - wie erwartet - erhebliche Variationen der Lufttemperatur im Saugrohl TL aufgetreten sind. Vielmehr wurden auch starke Schwankungen des Drehmoments MD beobachtet. Auch das Drehmoment MD konnte mithin entgegen der Vorgabe des Arbeitsplans nicht an allen Arbeitspunkten auf konstant MD = 30 Nm eingestellt werden. Die ebenfalls zur Kontrolle mitgemessene Lufttemperatur am Ladeluftkühlerausgang TLAD zeigte hingegen nur sehr geringe Schwankungen.

Eine nennenswerte Wirkung der Schwankungen des Drehmoments MD auf die verwendeten Modellansätze ist nicht auszuschließen. Daher wird der Modellansatz um die 6 Terme MD, $MD^2$, MD∗SB, MD∗PL, MD∗AGR und MD∗TL auf 15 + 6 = 21 Terme erweitert. Da insgesamt 23 Arbeitspunkte vermessen wurden, kann ein Modellansatz mit 21 Termen noch berechnet werden.

Die der tatsächlichen Auswertung der Versuchsergebnisse zugrundeliegende Formel lautet somit beispielsweise für die Stickoxidemissionen : NOx:

$$NOx = a_0 + a_{SB} * SB + a_{PL} * PL + a_{AGR} * AGR + a_{TL} * TL + a_{MD} * MD$$

$$+ a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR$$

$$+ a_{MD.SB} * MD * SB + a_{MD.PL} * MD * PL + a_{MD.AGR} * MD * AGR$$

$$+ a_{MD.TL} * MD * TL + a_{SB^2} * SB^2 + a_{PL^2} * PL^2 + a_{AGR^2} * AGR^2$$

$$+ a_{TL^2} * TL^2 + a_{MD^2} * MD^2$$

Die Meßwerte für die drei Zielgrößen Kraftstoffverbrauch KRSTDS, Rußemission RUSSZ und Stickoxidemission NOx an den 23 Arbeitspunkten auf dem Antriebprüfstand sind in der folgenden Tabelle 5 dargestellt.

Tabelle 5:

| Am Prüfstand gemessene Zielgrößen (RUSSZ = Rußzahl, NOx = Stickoxide in ppm, KRSTDS = Kraftstoffdurchsatz in kg/h, AROIST = Luftdurchsatz in kg/h aus dem Signal des Heißfilmsensors) | | | | |
|---|---|---|---|---|
| Arbeitspunkt | Russzahl RUSSZ | Stickoxide NOx | Kraftstoffverbrauch KRSTDS | Luftdurchsatz AROIST |
| Nr. | 1 | ppm | kg/h | kg/h |
| 1 | 0.305 | 372 | 2.07 | 111 |
| 2 | 0.285 | 429 | 2.03 | 120 |
| 3 | 0.295 | 429 | 2.13 | 120 |
| 4 | 0.695 | 155 | 2.18 | 121 |
| 5 | 0.675 | 157 | 2.16 | 123 |
| 6 | 0.255 | 394 | 2.12 | 131 |
| 7 | 1.602 | 90 | 2.23 | 77 |
| 8 | 0.915 | 150 | 2.19 | 106 |
| 9 | 1.103 | 124 | 2.18 | 89 |
| 10 | 0.275 | 389 | 2.09 | 127 |

Tabelle 5: (fortgesetzt)

| Am Prüfstand gemessene Zielgrößen (RUSSZ = Rußzahl, NOx = Stickoxide in ppm, KRSTDS = Kraftstoffdurchsatz in kg/h, AROIST = Luftdurchsatz in kg/h aus dem Signal des Heißfilmsensors) | | | | |
|---|---|---|---|---|
| Arbeitspunkt | Russzahl RUSSZ | Stickoxide NOx | Kraftstoffverbrauch KRSTDS | Luftdurchsatz AROIST |
| Nr. | 1 | ppm | kg/h | kg/h |
| 11 | 0.825 | 146 | 2.3 | 116 |
| 12 | 0.725 | 151 | 2.3 | 129 |
| 13 | 0.255 | 414 | 1.97 | 120 |
| 14 | 0.725 | 207 | 2.16 | 115 |
| 15 | 1.335 | 189 | 2.17 | 71 |
| 16 | 0.735 | 149 | 2.14 | 131 |
| 17 | 0.365 | 396 | 2.07 | 109 |
| 18 | 0.265 | 394 | 2.11 | 130 |
| 19 | 2.66 | 85 | 2.23 | 70 |
| 20 | 0.755 | 153 | 2.25 | 131 |
| 21 | 0.665 | 304 | 2.09 | 82 |
| 22 | 0.765 | 186 | 2.25 | 120 |
| 23 | 0.655 | 156 | 2.22 | 121 |

Die drei Zielgrößen wurden am Antriebsprüfstand jeweils in an sich in bekannter Weise gemessen. Außerdem wurde mittels eines Heißfilmsensors zusätzlich der Luftdurchsatz AROIST erfaßt.

Die statistische Analyse und Darstellung der Meßergebnisse geschieht in an sich bekannter Weise ebenfalls mittels der komerziell erhältlichen, universellen Meßplanungs-, -datenanalyse und -auswertungssoftwarewerkzeuge RS/1 Discover und RS/1 Explore.

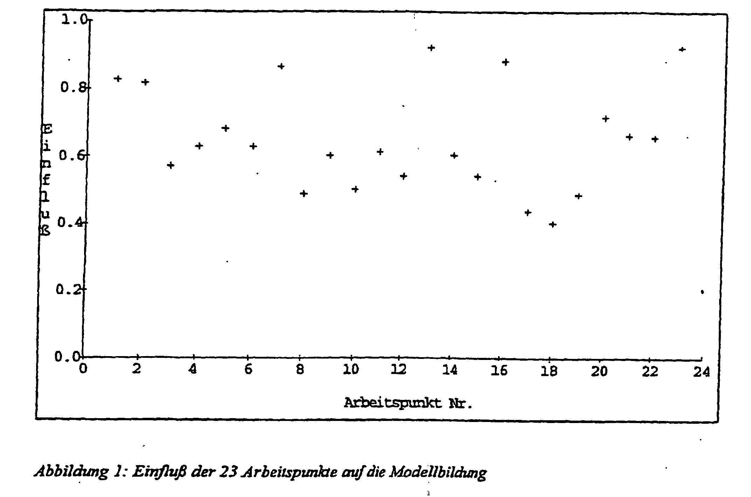

Eine statistische Betrachtung der Gewichtung der Meßergebnisse zeigt, daß alle 23 Arbeitspunkte einen wesentlichen Einfluß auf die Modellbildung ausüben (Abb. 1).

Einen Überblick über die Abhängigkeiten zwischen den einzelnen Größen liefert eine lineare Korrelationsanalyse, deren Ergebnis in Tabelle 6 dargestellt ist. Folgende Abhängigkeiten lassen sich z. B. aus der Tabelle 6 ermitteln:

Der Einspritzbeginn SB korreliert geringfügig mit dem Drehmoment MD und stark mit den Stickoxidemissionen NOx und dem Verbrauch KRSTDS. Durch den Ladedruck PL wird das Drehmoment MD, die Temperatur am Ausgang des Ladeluftkühlers TLAD und der Verbrauch KRSTDS beeinflußt. Die Abgasrückführung AGR, das Drehmoment MD und die Saugrohrlufttemperatur TL korrelieren mit allen Zielgrößen. Die konkreten Abhängigkeiten werden in der nachfolgenden Modellanalyse ermittelt.

Tabelle 6:

| | SB | PL | AGR | MD | TLAD | TL | KRSTDS | NOx | RUSSZ |
|---|---|---|---|---|---|---|---|---|---|
| Lineare Korrelationsanalyse der Variablen (aus 23 von 23 Arbeitspunkten) | | | | | | | | | |
| SB | 1.000 | 0.030 | -0.026 | -0.197 | 0.048 | 0.027 | 0.766 | -0.796 | 0.435 |
| PL | 0.030 | 1.000 | 0.039 | -0.288 | 0.663 | 0.095 | 0.265 | 0.009 | 0.081 |
| AGR | -0.026 | 0.039 | 1.000 | 0.189 | 0.184 | -0.764 | -0.184 | 0.471 | -0.569 |
| MD | -0.197 | -0.288 | 0.189 | 1.000 | -0.041 | -0.477 | -0.090 | 0.425 | -0.464 |
| TLAD | 0.048 | 0.663 | 0.184 | -0.041 | 1.000 | 0.031 | 0.269 | 0.047 | 0.040 |
| TL | 0.027 | 0.095 | -0.764 | -0.477 | 0.031 | 1.000 | 0.219 | -0.566 | 0.818 |
| KRSTDS | 0.766 | 0.265 | -0.184 | -0.090 | 0.269 | 0.219 | 1.000 | -0.721 | 0.533 |
| NOx | -0.796 | 0.009 | 0.471 | 0.425 | 0.047 | -0.566 | -0.721 | 1.000 | -0.780 |

Tabelle 6: (fortgesetzt)

| | SB | PL | AGR | MD | TLAD | TL | KRSTDS | NOx | RUSSZ |
|---|---|---|---|---|---|---|---|---|---|
| _Lineare Korrelationsanalyse der Variablen (aus 23 von 23 Arbeitspunkten)_ | | | | | | | | | |
| RUSSZ | 0.435 | 0.081 | -0.569 | -0.464 | 0.040 | 0.818 | 0.533 | -0.780 | 1.000 |
| Werte sind signifikant verschieden von 0 (mit 95 % wenn sie in absoluten Zahlen größer als 0.413 | | | | | | | | | |

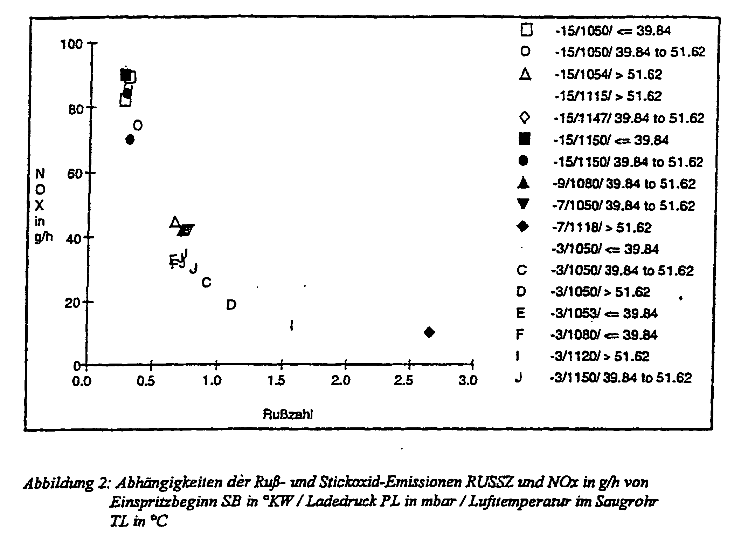

In der Abbildung 2 werden die Meßwerte bezüglich der Zielgrößen Stickoxidemission NOx und Russemission (Russzahl) RUSSZ in Abhängigkeit von den Einflußfaktoren Einspritzbeginn SB, Ladedruck PL und Saugrohrlufttemperatur TL dargestellt. Es ist zu erkennen, daß die optimalen Werte für die gleichzeitige Minimierung beider Größen mit einem Einspritzbeginn SB von -3 °KW erreicht werden. Eine exaktere Analyse kann aus den Modellen entwickelt werden.

Die weitere Auswertung wird im folgenden anhand der Zielgröße Stickoxidemission NOx gezeigt. Die Auswertung verläuft für die beiden anderen Zielgrößen Kraftstoffverbrauch KRSTDS und Russemission (Russzahl) RUSSZ analog.

Der Auswertung der Versuchsergebnisse für die Stickoxidemissionen NOx liegt wie oben angegeben folgende Formel zugrunde:

$$NOx = a_0 + a_{SB} * SB + a_{PL} * PL + a_{AGR} * AGR + a_{TL} * TL + a_{MD} * MD$$

$$+ a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR$$

$$+ a_{MD.SB} * MD * SB + a_{MD.PL} * MD * PL + a_{MD.AGR} * MD * AGR$$

$$+ a_{MD.TL} * MD * TL + a_{SB^2} * SB^2 + a_{PL^2} * PL^2 + a_{AGR^2} * AGR^2$$

$$+ a_{TL^2} * TL^2 + a_{MD^2} * MD^2$$

Es handelt sich hierbei um ein quadratisches Polynom mit fünf Variablen, nämlich dem Kraftstoffeinspritzbeginn SB, dem mittleren Ladedruck PL, der Abgasrückführrate AGR, der Lufttemperatur im Saugrohr vor dem Einlaßventil TL und dem Drehmoment MD. Die mathematische Funktion enthält insgesamt 21 Terme und dementsprechend 21 freie Parameter, nämlich die Koofizienten $a_x$ des quadratischen Polynoms.

Zur besseren Vergleichbarkeit der Größe der zu ermittelnden Werte für die 21 Parameterkoofizienten ax und damit der Bedeutung der verschiedenen Variablen werden die Werte der Variablen der Polynomfunktion für die Stickoxidemission NOx jeweils auf einen einheitlichen Wertbereich transformiert und normiert, und zwar in dem der jeweils kleinste eingestellte Einstellwert $f_{min}$ gleich -1 gesetzt wird und der jeweils größte eingestellte $f_{max}$ auf +1 gesetzt wird. Beispielsweise wird beim Ladedruck PL der kleinste gemessene Einstellwert von PL = 1050 mbar gleich -1 gesetzt, während der größte gemessene Einstellwert von PL = 1150 mbar gleich +1 gesetzt wird. Dementsprechend wird die kleinste gemessene Abgasrückführungsrate AGR von AGR = 40 % gleich -1 gesetzt, während die größte gemessene Abgasrückführungsrate von AGR = 80 % gleich +1 gesetzt wird. Diese normierende Transformation erleichtert wie angegeben den Vergleich der Bedeutung der einzelnen Terme für das Zielgrößenergebnis NOx, da der numerische Wert der ermittelten Polynomkoeffizienten dann deren Bedeutung für das Zielgrößenergebnis direkt widerspiegelt. Die Auswertung kann aber auch selbstverständlich ohne eine solche normierende Transformation vorgenommen werden. Die Transformation muß auch nicht für alle Variablen vorgenommen werden; im Ausführungsbeispiel wurde beipielsweise für den Einflußfaktor Lufttemperatur vor dem Einlaßventil TL und dessen Quadrat TL$^2$ darauf verzichtet (vergleiche Tabellen 7 und 8).

Die Anpassung der einzelnen 21 Parameter der verwendeten Polynomfunktion an die Ergebnisse in den 23 Arbeitspunkten geschah mittels eines bekannten statistischen Auswerteverfahrens, nämlich mittels des bekannten Verfahrens der kleinsten Quadrate anhand einer Regressionsgerade. Dazu wurden wiederum die kommerziell erhältlichen, universellen Meßplanungs-, -datenanalyse und -auswertungssoftwerkzeuge RS/1 Discover und RS/1 Explore verwendet. Die Tabelle 7 zeigt den vollständigen Modellansatz mit allen 21 ermittelten Parameterkoeffizienten der 21 Terme des für die Stickoxidemission NOx verwendeten quadratischen Polynom-Ansatzes.

Tabelle 7:

| Vollständiges Modell für den Massenstrom der Stickoxidemission | | | | |
|---|---|---|---|---|
| Koeffizienten für LS, Zielgröße NOX, | | | | |
| Term | Koeff, $a_x$ | Std.abw. | T-Wert | Signif. |
| 1 1 | 116.836004 | 89.633137 | 1.30 | 0.3223 |
| 2 -SB | -55.133720 | 5.604357 | -9.84 | 0.0102 |
| 3 -PL | 22.144801 | 27.824673 | 0.80 | 0.5096 |
| 4 -AGR | 1.167346 | 49.049756 | 0.02 | 0.9832 |
| 5 -MD | 20.140600 | 27.008276 | 0.75 | 0.5336 |
| 6 -SB*PL | -0.582767 | 0.583164 | -1.00 | 0.4229 |
| 7 -SB*AGR | 1.074790 | 1.319033 | 0.81 | 0.5008 |
| 8 -SB*MD | -0.450068 | 1.425292 | -0.32 | 0.7821 |
| 9 -PL*AGR | -2.758707 | 2.443391 | -1.13 | 0.3761 |
| 10 -PL*MD | -2.112677 | 2.151024 | -0.98 | 0.4296 |
| 11 -AGR*MD | -0.446591 | 4.643464 | -0.10 | 0.9321 |
| 12 -SB**2 | 9.256800 | 2.377801 | 3.89 | 0.0601 |
| 13 -PL**2 | 6.575369 | 3.261768 | 2.02 | 0.1814 |
| 14 -AGR**2 | -4.224712 | 3.401141 | -1.24 | 0.3401 |
| 15 -MD**2 | -3.627114 | 3.457786 | -1.05 | 0.4043 |
| 16 -TL | -2.425010 | 3.837210 | -0.63 | 0.5920 |
| 17 -TL**2 | 0.015405 | 0.040613 | 0.38 | 0.7410 |
| 18 -TL*SB | 0.716589 | 0.117707 | 6.09 | 0.0259 |
| 19 -TL*PL | -0.444439 | 0.653277 | -0.68 | 0.5665 |
| 20 -TL*AGR | 0.096197 | 1.086991 | 0.09 | 0.9375 |
| 21 -TL*MD | -0.372205 | 0.597656 | -0.62 | 0.5970 |

Es wird insbesondere aus der letzten Spalte (Signifikanz) deutlich, daß viele Terme keine Bedeutung für die NOx-Emission haben. Die Terme mit T-Werten kleiner 1 können eliminiert, das heißt aus der der Auswertung zugrundeliegenden Polynomfunktionsformel weggelassen werden. Dieses sollte jedoch in einzelnen Schritten - beginnend mit dem Term jeweils kleinster Signifikanz - erfolgen, da nach jedem Entfernen eines Terms die Signifikanz der übrigen sich aufgrund der veränderten, der statistischen Anpassung zugrundeliegenden Polynomfunktionsformel neu berechnet. Da aufgrund der 23 Arbeitspunkte zwei Meßwerte mehr vorliegen, als zur Bestimmung der 21 Polynomkoofizienten notwendig sind, werden in an sich bekannter Weise innerhalb des Auswerteprogramms statistische Ausgleichsmethoden eingesetzt.

Werden alle Polynomterme, die keinen signifikanten Einfluß auf die Stickoxidemission NOx ausüben, aus dem vollständigen Modellansatz gemäß Tabelle 7 entfernt, bleiben noch zehn signifikante Terme übrig. Diese zehn signifikanten Terme sind in der folgenden Tabelle 8 dargestellt.

Tabelle 8:

| Modell für die Stickoxidemissionen NOx mit allen signifikanten Termen | | | | |
|---|---|---|---|---|
| Koeffizienten für LS, Zielgröße NOX | | | | |
| Term | Koeff. $a_x$ | Std.abw. | T-Wert | Signif. |
| 1 1 | 72.478644 | 4.803930 | 15.09 | 0.0001 |
| 2 -SB | -51.674042 | 1.931396 | -26.75 | 0.0001 |
| 3 -PL | 1.812678 | 0.460408 | 3.94 | 0.0017 |
| 4 -AGR | 6.898174 | 1.196411 | 5.77 | 0.0001 |
| 5 -MD | 2.554958 | 0.665147 | 3.84 | 0.0020 |
| 6 -SB**2 | 8.185808 | 1.341441 | 6.10 | 0.0001 |
| 7 -PL**2 | 4.212964 | 1.419855 | 2.97 | 0.0109 |
| 8 -AGR**2 | -4.938841 | 1.577394 | -3.13 | 0.0080 |

Tabelle 8:   (fortgesetzt)

| Modell für die Stickoxidemissionen NOx mit allen signifikanten Termen | | | | |
|---|---|---|---|---|
| Koeffizienten für LS, Zielgröße NOX | | | | |
| Term | Koeff. $a_x$ | Std.abw. | T-Wert | Signif. |
| 9 -TL | -0.676348 | 0.101358 | -6.67 | 0.0001 |
| 10 -TL*SB | 0.635087 | 0.040353 | 15.74 | 0.0001 |

Die ermittelte Formel für die Stickoxidemission NOx reduziert sich damit auf folgenden Ausdruck:

$$NOx = a_0 + a_{SB} * SB + a_{PL} * PL + a_{AGR} * AGR + a_{TL} * TL + a_{MD} * MD$$

$$+ a_{TL.SB} * TL * SB + a_{SB^2} * SB^2 + a_{PL^2} * PL^2 + a_{AGR^2} * AGR^2$$

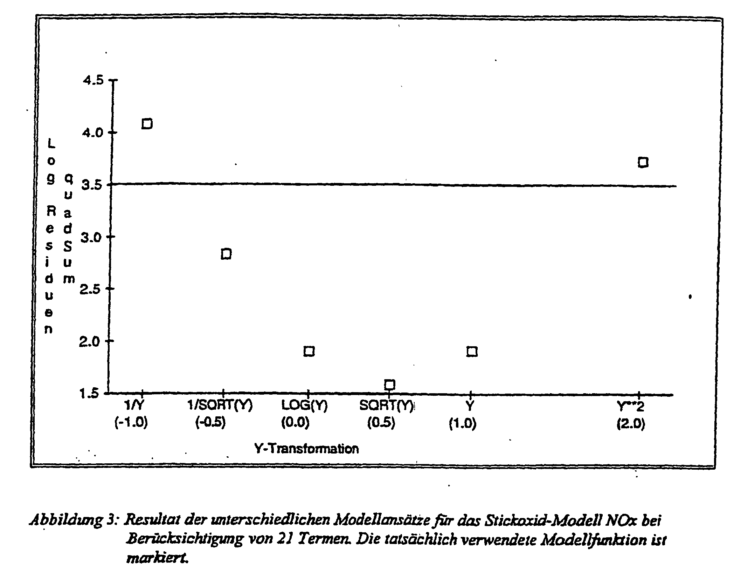

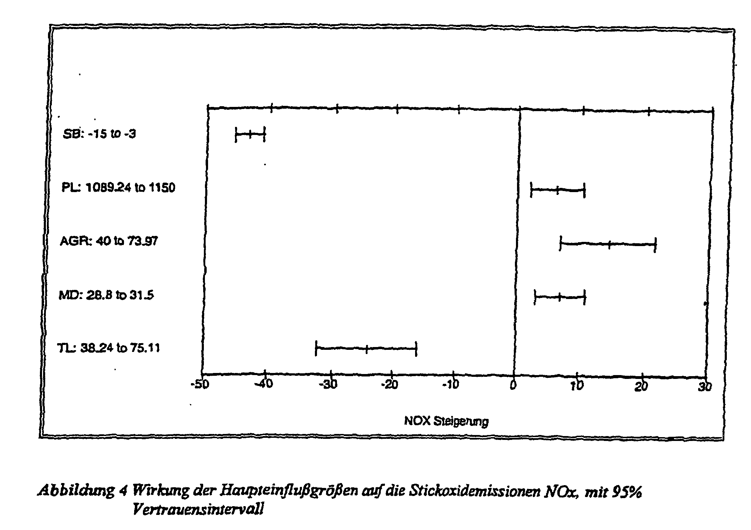

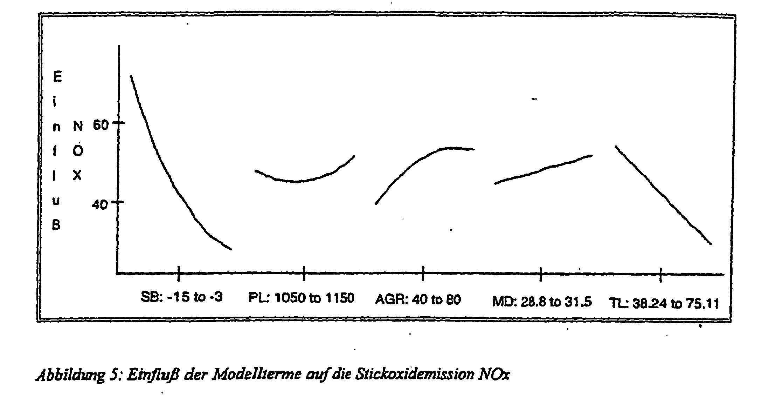

Zusätzlich wurde eine Kontrollberechnung durchgeführt, ob nicht ein anderer Modellansatz, d. h. die Beschreibung der Stickoxidemission NOx mittels einer anderen mathematischen Funktion, zu einer besseren Beschreibung des Verhaltens der Stickoxidemission NOx führt. Bei der der Auswertung zugrundeliegenden Formel entspricht das quadratische Polynom der Stickoxidemission NOx selbst. Versuchsweise wurden auch die Fälle durchgerechnet, daß dasselbe quadratische Polynom stattdessen dem Inversen (1 / NOx) der Stickoxidemission NOx, dem Inversen der Wurzel (1 / SORT[NOx]), dem Logarithmus (log NOx), der Wurzel (SQRT[NOx]) bzw. dem Quadrat ($NOx^2$) der Stickoxidemission NOx entspricht. Diese Berechnungen geschahen ebenfalls in an sich bekannter Weise mittels der Softwarewerkzeuge RS/1 Discover und RS/1 Explore. In Abb. 3 ist die Wirkung der verschiedenen Funktionsmodellansätze auf den Fehler der Residuen dargestellt. Aufgrund der geringen Unterschiede zwischen den einzelnen Funktionsansätzen zeigte sich, daß für die Stickoxidemission NOx kein Modellwechsel notwendig ist.
Die Wirkungen der fünf ermittelten Haupteinflußfaktoren Kraftstoffeinspritzbeginn SB, Ladedruck PL, Abgasrückführrate AGR, Drehmoment MD und Lufttemperatur im Saugrohr TL auf die Zielgröße Stickoxidemission NOx sowie der Einfluß dieser fünf Modelleinflußfaktoren sind in den Abbildungen 4 und 5 dargestellt.

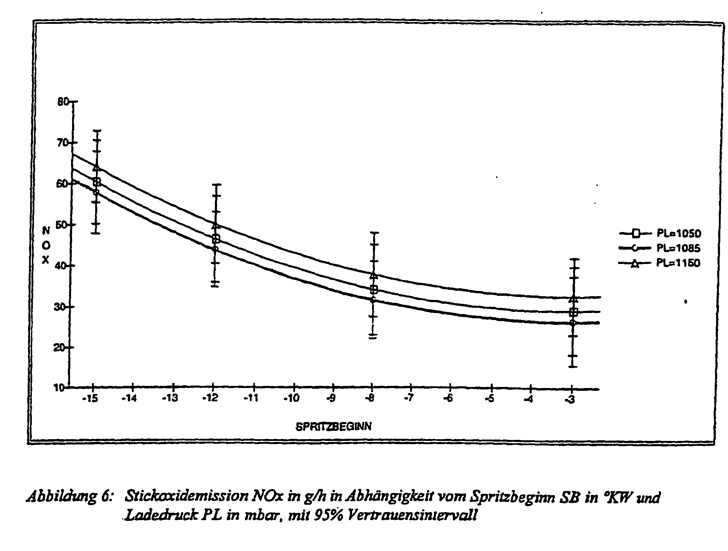

Die Abbildung 6 zeigt die aus der bestimmten Formel ermittelten Werte der Stickoxidemission NOx in Abhängigkeit von den Einflußfaktoren Spritzbeginn SB und mittlerer Ladedruck PL. Die Abgasrückführrate AGR ist dabei auf AGR = 60 %, das Drehmoment MD auf MD = 30 Nm und die Lufttemperatur vor dem Einlaßventil auf TL = 56,675°C festgelegt.
Da nunmehr ein vollständiges, sehr gut per Computer verarbeitbares Modell für die Stickoxidemission NOx gemäß Tabelle 8 vorliegt, können mit der ermittelten Formel auf einfache Weise zahlreiche Berechnungen durchgeführt werden. Minimiert man beispielsweise im Rechenmodell den Kraftstoffverbrauch KSTDS unter der Beschränkung, daß die Stickoxidemission NOx zur Erfüllung gesetzlicher Forderungen nie mehr als NOx = 30 g/h betragen darf, so erhält man die optimierten Werte gemäß Tabelle 9.

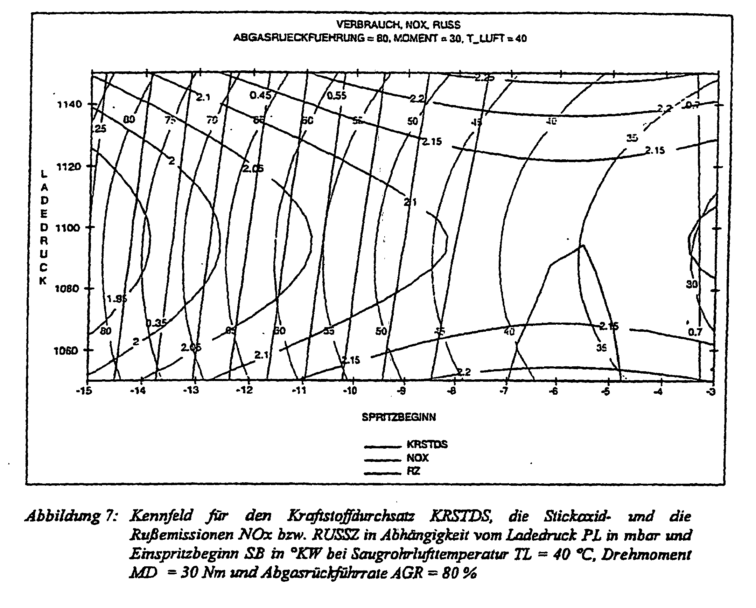

In Abbildung 7 ist für einen Betriebspunkt das Kennfeld anhand der ermittelten Formel gemäß Tabelle 8 berechnet und grafisch dargestellt.

Tabelle 9:

| Ergebnis einer Optimierung des Kraftstoffdurchsatzes KRSTDS mit der Beschränkung der Stickoxidemissionen NOx auf NOx < 30 g/h | | | |
|---|---|---|---|
| Faktoren, Zielgrößen | Bereich | Startwerte | Optimum |
| 1 Faktoren | | | |
| 2 SPRITZBEGINN | -15 to -3 | -12 | -3.005 |
| 3 LADEDRUCK | 1050 to 1150 | 1100 | 1095.8 |
| 4 ABGASRUECKFUEHR | 40 to 80 | 60 | 40.169 |
| 5 MOMENT | 30 | | 30 |
| 6 T_EINLASS | 38.24 to 75.11 | 56.67 | 41.47 |
| 7 | | | |
| 8 Zielgrößen | | | |
| 9 VERBRAUCH | MIN | | 2.0919 |
| 10 NOX | <30 | | 15.461 |

Tabelle 9:   (fortgesetzt)

| Ergebnis einer Optimierung des Kraftstoffdurchsatzes KRSTDS mit der Beschränkung der Stickoxidemissionen NOx auf NOx < 30 g/h | | | |
|---|---|---|---|
| Faktoren, Zielgrößen | Bereich | Startwerte | Optimum |
| 11 PARTIKEL | | | 1.2378 |
| 12 RUSS | | | 0.71468 |

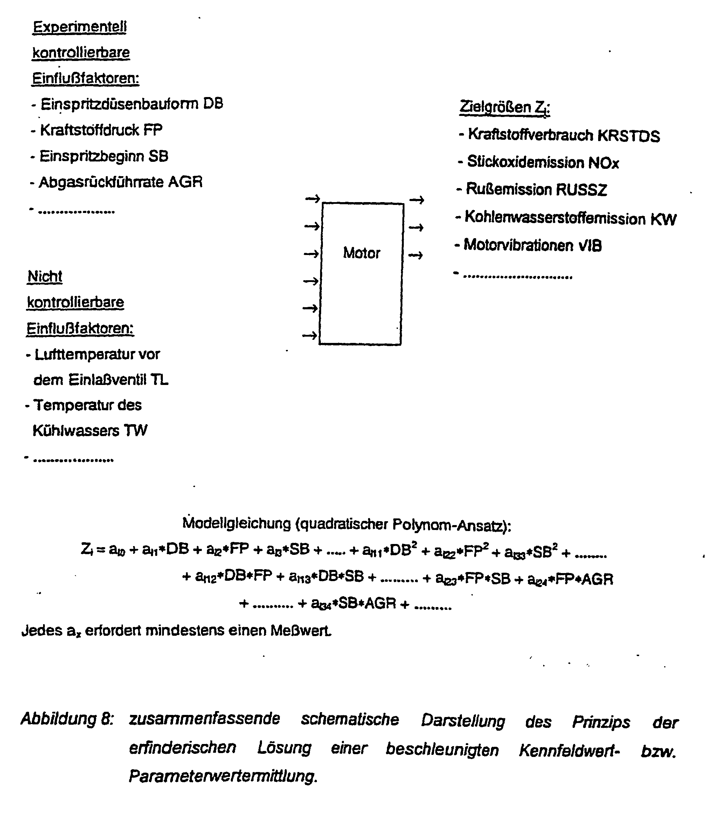

Die Ergebnisse verdeutlichen, daß mit Hilfe der Erfindung in einem Parameterraum mit 5 Einflußfaktoren (SB, PL, AGR, MD, TL) die Anzahl der Meßpunkte um mehr als den Faktor 10 verringert werden kann. Ohne die Verwendung des neuartigen Verfahrens zur Bestimmung von Kennfelddaten bzw. Motorsteuerparametern wären $7 * 4 * 5 * 3 = 420$ Arbeitspunkte zu vermessen gewesen (sofern man die Schwankungen des Drehmoments im Experiment als drei einzustellende Drehmomentwerte MD von MD = 29, 30 und 31 Nm betrachtet). Obwohl statt dessen nur 23 Arbeitspunkte vermessen wurden, gelingt dennoch eine Aussage über Zusammenhänge zwischen den Einflußfaktoren und den Zielgrößen in einer Form, die insbesondere auch die verkoppelten Abhängigkeiten beschreibt. In der Abbildung 8 ist nochmals das Prinzip der beschleunigten Kennfeldwert- bzw. Parameterwertermittlung gemäß der Erfindung zusammengefaßt.

In Weiterbildung der Erfindung läßt sich die bei der Auswertung der experimentell auf dem Motorprüfstand gemessenen Meßwerte ermittelte Formel nicht nur zur Berechnung eines Kennlinienfeldes ausnutzen, sondern man kann die ermittelten Koeffizienten des quadratischen Polynoms direkt zur Steuerung des Motors einsetzen.

In Motorsteuergeräten wird üblicherweise das Drehmoment MD in Form einer Look-up-Tabelle (eben einer numerischen Darstellung des mehrdimensionalen Kennlinienfeldes) in der Speichereinheit abgelegt. Statt die gesamte Look-up-Tabelle in der Speichereinheit abzuspeichern, werden nun nurmehr die ermittelten Koeffizienten des Polynoms in der Speichereinheit abgelegt. Dazu wird nach Ermittlung der Koeffizienten des oben angegebenen, der Meßauswertung zugrundeliegenden Polynoms für NOx dieses in die folgende Normalform für MD gebracht

$$MD^2 + (1/a_{MD^2}) * (a_{MD} + a_{MD.SB} * SB + a_{MD.PL} * PL + a_{MD.AGR} * AGR + a_{MD.TL} * TL) * MD$$

$$+ (1/a_{MD^2}) * (a_0 + a_{SB} * SB + a_{PL} * PL + a_{AGR} * AGR + a_{TL} * TL + a_{SB.PL} * SB * PL$$

$$+ a_{SB.AGR} * SB * AGR + a_{PL.AGR} * PL * AGR + a_{TL.SB} * TL * SB + a_{TL.PL} * TL * PL$$

$$+ a_{TL.AGR} * TL * AGR + a_{SB^2} * SB^2 + a_{PL^2} * PL^2 + a_{AGR^2} * AGR^2 + a_{TL^2} * TL^2$$

$$- NOx) = 0$$

und anschließend in bekannter Weise nach dem Drehmoment MD aufgelöst:

$$MD_{1/2} = - (1 / [2 * a_{MD^2}]) * (a_{MD} + a_{MD.SB} * SB + a_{MD.PL} * PL + a_{MD.AGR} * AGR + a_{MD.TL} * TL)$$

$$\pm \{(1 / [2 * a_{MD^2}])^2 * (a_{MD} + a_{MD.SB} * SB + a_{MD.PL} * PL + a_{MD.AGR} * AGR$$

$$+ a_{MD.TL} * TL)^2 - (1/a_{MD^2}) * (a_0 + a_{SB} * SB + a_{PL} * PL + a_{AGR} * AGR$$

$$+ a_{TL} * TL + a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR + a_{SB^2} * SB^2$$

$$+ a_{PL^2} * PC^2 + a_{AGR^2} * AGR^2 + a_{TL^2} * TL^2 - NOx)\}^{1/2}$$

Für die auf zehn signifikante Terme reduzierte Formel gemäß Tabelle 8 lauten die Zusammenhänge stattdessen:

$$MD = - (1 / a_{MD}) * (a_0 + a_{SB} * SB + a_{PL} * PL + a_{AGR} * AGR + a_{TL} * TL - NOx$$

$$+ a_{TL.SB} * TL * SB + a_{SB^2} * SB^2 + a_{PL^2} * PL^2 + a_{AGR^2} * AGR^2)$$

Ergeht nun von der Steuer- und Recheneinheit des Motorsteuergerätes eine Anforderung eines bestimmten, benötigten Drehmoments MD, so wird nicht mehr dieser benötigte Wert des Drehmoments und seine ihn bestimmenden Einflußtaktoren in einer in der Speichereinheit gespeicherten Look-up-Tabelle ermittelt, sondern die Parameter werden derart festgelegt, daß sich aus der angegebenen Formel gerade das geforderte Drehmoment ergibt. Wie Versuche ergeben haben, ist es bereits mit einer geringen Anzahl von gemessenen Arbeitspunkten möglich, das angeforderte Drehmoment mit einer Genauigkeit von 2 bis 3 % zu treffen. Dieser Wert liegt im Bereich der Serienstreuung bei der Serienfertigung von Verbrennungsmotoren, so daß eine darüber hinaus gehende Genauigkeit der Drehmomentsteuerung - die entsprechend mehr gemessene Arbeitapunkte erfordern würde - unnötig ist.

Verwendet man mithin zur Steuerung des Verbrennungsmotors lediglich die bei vorangegangenen Arbeitspunkt-Messungen ermittelten Funktionsparameter und nicht mehr das komplette Kennlinienfeld, so lassen sich beträchtliche Einsparungen an Speicherplatz erzielen. Die Speicherung von 7000 Punkten eines mehrdimensionalen Kennlinienfeldes erfordert beispielsweise bei einer Genauigkeit von jeweils 8 bit = 1 Byte eine Speicherkapazität von etwa 7 kByte; werden stattdessen z. B. die Parameterkoeffizienten eines quadratischen Polynoms mit insgesamt 21 Termen abgespeichert, so werden bei vergleichbarer, für die Praxis völlig ausreichender Genauigkeit nur 21 Byte benötigt. Für die Auswertung des Polynoms wird keine leistungsstärkere Steuer- und Recheneinheit im Motorsteuergerät benötigt als bei der Abspeicherung aller Werte des Kennlinienfeldes: auch bei konventionellen Motorsteuerverfahren und -geräten müssen nämlich laufend Interpolationsaufgaben berechnet werden, da ein realer Motor nur selten bezüglich aller Parameter genau auf solchen Werten läuft, die in der Look-up-Tabelle abgespeichert sind.

Durch das erfindungsgemäße Steuerverfahren für einen Verbrennungsmotor wird also ein Aufbau eines elektronischen Motorsteuergerätes ermöglicht, der mit wesentlich geringerem Speicherplatz in der Speichereinheit auskommt, ohne daß dadurch andere Komponenten des Motorsteuergerätes leistungsstärker und daher kostspieliger ausgelegt werden müßten.

**Patentansprüche**

**1.** Verfahren zur Bestimmung von einem oder mehreren Parametern für eine oder mehrere mathematische Funktionen zur Steuerung eines Verbrennungsmotors, wobei

- einer oder mehreren Zielgröße(n) jeweils eine mathematische Funktion von jeweils einem oder mehreren Einflussfaktor(en) zugeordnet wird, wobei die Funktion jeweils eine Abhängigkeit der Zielgröße(n) von dem bzw. den Einflussfaktor(en) anhand eines oder mehrerer Parameter beschreibt,
- in experimentellen Versuchen ein oder mehrere Messwert(e) für den Verbrennungsmotor gemessen wird bzw. werden, wobei die Anzahl der Messwerte mindestens gleich der maximalen Anzahl der in einer verwendeten Funktion vorkommenden Parameter ist, und
- anschließend anhand der Messwerte die Parameter für die eine oder mehreren mathematischen Funktion(en) der einen oder mehreren Einflussfaktoren berechnet werden,

**dadurch gekennzeichnet,**
**dass** nach der Berechnung der Parameter der einen oder mehreren Funktion(en) der einen oder mehreren Zielgröße(n) überprüft wird, welche Einflussfaktoren jeweils nur einen im Rahmen der geforderten Genauigkeit vernachlässigbaren Einfluss auf die eine oder mehreren Zielgröße(n) haben, und diese bestimmten, vernachlässigbaren Einflussfaktoren daraufhin in der jeweils betrachteten Funktion nicht mehr berücksichtigt werden.

**2.** Verfahren nach Anspruch 1, **dadurch gekennzeichnet, dass** sukzessive der jeweils am meisten vernachlässigbare Einflussfaktor - d.h. der Einflussfaktor mit der geringsten Bedeutung für die jeweilige Zielgröße - bestimmt wird und anschließend die Berechnung der Parameter der jeweiligen Funktion für die jeweilige Zielgröße unter Weglassung des derart bestimmten Einflussfaktors wiederholt wird.

**3.** Verfahren nach Anspruch 1 oder 2, **dadurch gekennzeichnet, dass** die eine oder mehrere mathematische Funktion(en) als zusätzliche Terme einfache Produkte von Einflussfaktoren aufweisen, denen jeweils ein Parameter zugeordnet ist, und überprüft wird, welche Produkte von Einflussfaktoren jeweils nur einen im Rahmen einer geforderten Genauigkeit vernachlässigbaren Einfluss auf die eine oder mehreren Zielgrößen haben, und diese bestimmten, vemachlässigbaren Produkte von Einflussfaktoren daraufhin in der jeweils betrachteten Funktion nicht mehr berücksichtigt werden.

**4.** Verfahren nach einem der vorhergehenden Ansprüche, **dadurch gekennzeichnet, dass** die eine oder mehreren Zielgröße(n)

- der Treibstoffverbrauch KRSTDS und/oder
- die Stickoxid-Emission NOx und/oder
- die Rußemission RUSSZ

sind.

**5.** Verfahren nach einem der vorhergehenden Ansprüche, **dadurch gekennzeichnet, dass** die Einflussfaktoren kontrollierbare Einflussfaktoren und/oder nicht kontrollierbare Einflussfaktoren sind.

**6.** Verfahren nach Anspruch 5, **dadurch gekennzeichnet, dass** die kontrollierbaren Einflussfaktoren

- der Kraftstoffeinspritzbeginn SB und/oder
- der mittlere Ladedruck PL und/oder
- die Abgasrückführrate AGR und/oder
- das Drehmoment MD und/oder
- die Motordrehzahl DRZ

sind.

**7.** Verfahren nach Anspruch 5 oder 6, **dadurch gekennzeichnet, dass** die nicht kontrollierbaren Einflussfaktoren

- die Lufttemperatur im Saugrohr vor dem Einlassventil TL und/oder
- die Lufttemperatur am Ausgang des Ladeluftkühlers TLAD und/oder
- die Kühlwassertemperatur TW

sind.

**8.** Verfahren nach einem der vorhergehenden Ansprüche, **dadurch gekennzeichnet, dass** die Anzahl der Messwerte größer als die maximale Anzahl der in einer verwendeten Funktion vorkommenden Parameter ist, um mittels an sich bekannter statistischer Methoden, insbesondere statistischer Ausgleichsverfahren, die Anpassgenauigkeit der Parameter zu erhöhen.

**9.** Verfahren nach Anspruch 8, **dadurch gekennzeichnet, dass** das verwendete statistische Ausgleichsverfahren das Verfahren der kleinsten Quadrate mittels einer Regressionsgerade ist.

**10.** Verfahren nach einem der vorhergehenden Ansprüche, **dadurch gekennzeichnet, dass** die mathematische Funktion

- ein Polynom ist und/oder
- eine Exponential-Funktion ist, wobei das Argument der Exponential-Funktion ein Polynom ist, und/oder
- eine logarithmische Funktion ist, wobei das Argument der logarithmischen Funktion ein Polynom ist, und/oder
- eine quadratische Funktion ist, wobei das Argument der quadratischen Funktion ein Polynom ist, und/oder
- eine inverse Funktion ist, wobei das Argument der inversen Funktion ein Polynom ist, und/oder
- eine Wurzelfunktion ist, wobei das Argument der Wurzelfunktion ein Polynom ist, und/oder
- eine inverse Wurzelfunktion ist, wobei das Argument der inversen Wurzelfunktion ein Polynom ist.

**11.** Verfahren nach Anspruch 10, **dadurch gekennzeichnet, dass** das Polynom ein quadratisches Polynom einer oder mehrerer Variablen ist, wobei die Variablen die Einflussfaktoren sind.

**12.** Verfahren nach Anspruch 10 oder 11, **dadurch gekennzeichnet, dass** die Parameter die Koeffizienten des Polynoms sind.

**13.** Verfahren nach Anspruch 1, **dadurch gekennzeichnet, dass** vor Beginn der experimentellen Messungen für einige oder jeden experimentell kontrollierbaren Einflussfaktor ein kleinster Einstellwert $f_{min}$ sowie ein größter Einstellwert $f_{max}$ festgelegt werden und zwischen diesen Werten $f_{min}$ und $f_{max}$ kein, ein oder mehrere weitere Zwischeneinstellwerte zur Messung festgelegt werden.

14. Verfahren nach Anspruch 13, **dadurch gekennzeichnet, dass** die Zwischeneinstellwerte äquidistant festgelegt werden.

15. Verfahren nach Anspruch 13 oder 14, **dadurch gekennzeichnet, dass** die Einstellwerte mehrerer oder aller Einflussfaktoren zur besseren Vergleichbarkeit der Parameter dahingehend normiert werden, dass ihr kleinster einzustellender Wert $f_{min}$ jeweils gleich einem bestimmten, übereinstimmenden numerischen Wert - insbesondere 0 oder -1 - gesetzt wird, während ihr größter einzustellender Wert $f_{max}$ jeweils gleich einem anderen, übereinstimmenden numerischen Wert - insbesondere +1 - gesetzt wird.

16. Verfahren nach Anspruch 1, **dadurch gekennzeichnet, dass** während der experimentellen Messungen ein oder mehrere weitere mögliche Einflussgrößen jeweils mitgemessen werden und - sofern sich bei der Auswertung der Messungen erweist, dass diese möglichen Einflussgrößen einen im Rahmen der geforderten Genauigkeit nicht vernachlässigbaren Einfluss auf eine oder mehrere Zielgrößen haben - zumindest diese nicht vernachlässigbaren weiteren Einflussgrößen dann als Einflussfaktoren in die mathematische(n) Funktion(en) der einen oder mehreren Zielgrößen einbezogen werden.

17. Verfahren nach einem der vorhergehenden Ansprüche, **dadurch gekennzeichnet, dass** die Zielgrößen

- das Drehmoment MD und/oder
- die Katalysatortemperatur TKAT und/oder
- die Abgastemperatur TA

sind.

18. Verfahren nach einem der vorhergehenden Ansprüche, **dadurch gekennzeichnet, dass** die Einflussfaktoren

- die Drehzahl DRZ und/oder
- der Lambda-Wert LAMA und/oder
- der Zündwinkel ZWOUT und/oder
- die Last RLW und/oder
- der mittlere Ladedruck PL

sind

## Claims

1. Method for determining one or more parameters for one or more mathematical functions for controlling an internal combustion engine,

- one or more target variable(s) respectively being assigned a mathematical function of in each case one or more influencing factor(s), the function respectively describing a dependence of the target variable(s) on the influencing factor(s) by means of one or more parameter(s);
- one or more measured value(s) for the internal combustion engine being measured in experimental trials, the number of the measured values being at least equal to the maximum number of parameters occurring in the function used; and
- subsequently the measured values being used to calculate the parameters for the one or more mathematical function(s) of the one or more influencing factors;

**characterized in that**
a check is made after the calculation of the parameters of the one or more function(s) of the one or more target variable(s) as to which influencing factors in each case have only a negligible influence, in terms of the accuracy required, on the one or more target variable(s), and these determined, negligible influencing factors are thereupon no longer taken into account in the function respectively considered.

2. Method according to claim 1, **characterized in that** the respectively most negligible influencing factor - that is to

EP 1 273 782 B1

say the influencing factor of least importance for the respective target variable - is successively determined and the calculation of the parameters of the respective function for the respective target variable is subsequently repeated omitting the influencing factor thereby determined.

3. Method according to Claim 1 or 2, **characterized in that** the one or more mathematical function(s) have as additional terms simple products of influencing factors which are respectively assigned a parameter, and a check is made as to which products of influencing factors in each case have only a negligible influence, in terms of the accuracy required, on the one or more target variables, and these determined, negligible products of influencing factors are thereupon no longer taken into account in the function respectively considered.

4. Method according to one of the preceding claims, **characterized in that** one or more target variables are

- the fuel consumption KRSTDS and/or
- the nitrogen oxide emission NOx and/or
- the soot emission RUSSZ.

5. Method according to one of the preceding claims, **characterized in that** the influencing factors are controllable influencing factors and/or non-controllable influencing factors.

6. Method according to claim 5, **characterized in that** the controllable influencing factors are

- the start of fuel injection SB and/or
- the mean charging pressure PL and/or
- the exhaust-gas recirculation rate AGR and/or
- the torque MD and/or
- the engine speed DRZ.

7. Method according to Claim 5 or 6, **characterized in that** the non-controllable influencing factors are

- the air temperature in the induction pipe upstream of the inlet valve TL and/or
- the air temperature at the outlet of the charge-air cooler TLAD and/or
- the cooling-water temperature TW.

8. Method according to one of the preceding claims, **characterized in that** the number of measured values is greater than the maximum number of parameters occurring in a function used, in order to increase the matching accuracy of the parameters by means of statistical methods known per se, in particular statistical fitting methods.

9. Method according to Claim 8, **characterized in that** the statistical fitting method used is the method of least squares by means of a regression line.

10. Method according to one of the preceding claims, **characterized in that** the mathematical function

- is a polynomial and/or
- is an exponential function, the argument of the exponential function being a polynomial, and/or
- is a logarithmic function, the argument of the logarithmic function being a polynomial and/or
- is a quadratic function, the argument of the quadratic function being a polynomial, and/or
- is an inverse function, the argument of the inverse function being a polynomial, and/or
- is a root function, the argument of the root function being a polynomial, and/or
- is an inverse root function, the argument of the inverse root function being a polynomial.

11. Method according to Claim 10, **characterized in that** the polynomial is a quadratic polynomial of one or more variables, the variables being the influencing factors.

12. Method according to Claim 10 or 11, **characterized in that** the parameters are the coefficients of the polynomial.

13. Method according to claim 1, **characterized in that** before the start of the experimental measurements a smallest set value $f_{min}$ and a largest set value $f_{max}$ are fixed for some or each experimentally controllable influencing factor, and no intermediate set value or one or more further intermediate set values are fixed for measurement between

these values $f_{min}$ and $f_{max}$.

**14.** Method according to Claim 13, **characterized in that** the intermediate set values are fixed equidistantly.

**15.** Method according to Claim 13 or 14, **characterized in that** for the purpose of better comparability of the parameters the set values of several or all the influencing factors are normalized to the effect that their smallest value $f_{min}$ to be set is set in each case to be equal to a specific, identical numerical value - in particular 0 or -1 - while their largest value $f_{max}$ to be set is set in each case to be equal to another, identical numerical value - in particular +1.

**16.** Method according to one of the preceding claims, **characterized in that** during the experimental measurements one or more further possible influencing variables are also measured in each case and - if it emerges in evaluating the measurements that these possible influencing variables have an influence on one or more target variable(s) which cannot be neglected in terms of the required accuracy - at least these non-negligible further influencing variables are then incorporated as influencing factors into the mathematical function(s) of the one or more target variable(s).

**17.** Method according to one of the preceding claims, **characterized in that** the target variables are

- the torque MD and/or
- the catalyst temperature TKAT and/or
- the exhaust-gas temperature TA.

**18.** Method according to one of the preceding claims, **characterized in that** the influencing factors are

- the speed DRZ and/or
- the lambda value LAMA and/or
- the ignition angle ZWOUT and/or
- the load RLW and/or
- the mean charging pressure PL.

### Revendications

**1.** Procédé pour déterminer un ou plusieurs paramètres pour une ou plusieurs fonctions mathématiques en vue de la commande d'un moteur à combustion interne, dans lequel :

- une ou plusieurs valeurs cibles sont à chaque associées à une fonction mathématique d'un ou de plusieurs facteurs d'influence respectifs, la fonction décrivant à chaque fois une dépendance de la ou des valeurs cibles du ou des facteurs d'influence à l'aide d'un ou de plusieurs paramètres,
- une ou plusieurs valeurs de mesure pour le moteur à combustion interne sont mesurées au cours d'essais expérimentaux, le nombre des valeurs de mesure étant au moins égal au nombre maximum des paramètres présents dans une fonction utilisée, et
- ensuite, à l'aide des valeurs de mesure, les paramètres pour la ou les plusieurs fonctions mathématiques d'un ou de plusieurs facteurs d'influence sont calculés,

**caractérisé en ce que**
après le calcul des paramètres d'une ou de plusieurs fonctions d'une ou de plusieurs valeurs cibles, on vérifie quels facteurs d'influence n'ont à chaque fois qu'une influence négligeable, dans le cadre de la précision requise, sur la ou les plusieurs valeurs cibles, et ces facteurs d'influence déterminés négligeables ne sont ensuite plus pris en compte dans la fonction considérée particulière.

**2.** Procédé selon la revendication 1, **caractérisé en ce que** l'on détermine successivement le facteur d'influence respectif le plus souvent négligeable - c'est-à-dire le facteur d'influence ayant la plus faible signification pour la valeur cible respective - et ensuite on répète le calcul des paramètres de la fonction particulière pour la valeur cible respective en omettant le facteur d'influence ainsi déterminé.

**3.** Procédé selon la revendication 1 ou 2, **caractérisé en ce que** la ou les plusieurs fonctions mathématiques présentent, en tant que termes supplémentaires, des simples produits de facteurs d'influence, auxquels est associé à chaque fois un paramètre, et l'on vérifie quels produits de facteurs d'influence n'ont à chaque fois qu'une influence négligeable, dans le cadre d'une précision exigée, sur la ou les plusieurs valeurs cibles, et ces produits de facteurs d'influence déterminés, négligeables, ne sont ensuite plus pris en compte dans la fonction considérée particulière.

**4.** Procédé selon l'une quelconque des revendications précédentes, **caractérisé en ce que** la ou les plusieurs valeurs cibles sont

- la consommation de carburant KRSTDS et/ou
- l'émission d'oxydes d'azote NOx et/ou
- l'émission de suies RUSSZ.

**5.** Procédé selon l'une quelconque des revendications précédentes, **caractérisé en ce que** les facteurs d'influence sont des facteurs d'influence contrôlables et/ou des facteurs d'influence non contrôlables.

**6.** Procédé selon la revendication 5, **caractérisé en ce que** les facteurs d'influence contrôlables sont :

- le début de l'injection de carburant SB et/ou
- la pression de charge moyenne PL et/ou
- la vitesse de reflux des gaz d'échappement AGR et/ou
- le couple MD et/ou
- le régime du moteur DRZ.

**7.** Procédé selon la revendication 5 ou 6, **caractérisé en ce que** les facteurs d'influence non contrôlables sont :

- la température de l'air dans le tube d'admission avant la soupape d'admission TL et/ou
- la température de l'air à la sortie du refroidisseur d'air de charge TLAD et/ou
- la température de l'eau de refroidissement TW.

**8.** Procédé selon l'une quelconque des revendications précédentes, **caractérisé en ce que** le nombre des valeurs de mesure est supérieur au nombre maximum des paramètres se présentant dans une fonction utilisée, afin d'augmenter, au moyen de méthodes statistiques connues, notamment au moyen d'un procédé d'égalisation statistique, la précision d'adaptation des paramètres.

**9.** Procédé selon la revendication 8, **caractérisé en ce que** le procédé d'égalisation statistique utilisé est la méthode des moindres carrés au moyen d'une droite de régression.

**10.** Procédé selon l'une quelconque des revendications précédentes, **caractérisé en ce que** la fonction mathématique est

- un polynôme et/ou
- une fonction exponentielle, l'argument de la fonction exponentielle étant un polynôme, et/ou
- une fonction logarithmique, l'argument de la fonction logarithmique étant un polynôme, et/ou
- une fonction quadratique, l'argument de la fonction quadratique étant un polynôme, et/ou
- une fonction inverse, l'argument de la fonction inverse étant un polynôme, et/ou
- une fonction racine, l'argument de la fonction racine étant un polynôme, et/ou
- une fonction racine inverse, l'argument de la fonction racine inverse étant un polynôme.

**11.** Procédé selon la revendication 10, **caractérisé en ce que** le polynôme est un polynôme quadratique à une ou plusieurs variables, les variables étant les facteurs d'influence.

**12.** Procédé selon la revendication 10 ou 11, **caractérisé en ce que** les paramètres sont les coefficients du polynôme.

**13.** Procédé selon la revendication 1, **caractérisé en ce qu'**avant le début des mesures expérimentales pour quelques facteurs d'influence ou pour chaque facteur d'influence contrôlable par expérience, on établit une valeur d'ajustement minimale $f_{min}$ et une valeur d'ajustement maximale $f_{max}$ et on établit entre ces valeurs $f_{min}$ et $f_{max}$ aucune, une ou plusieurs autres valeurs d'ajustement intermédiaires pour la mesure.

**14.** Procédé selon la revendication 13, **caractérisé en ce que** les valeurs d'ajustement intermédiaires sont établies de manière équidistante.

**15.** Procédé selon la revendication 13 ou 14, **caractérisé en ce que** les valeurs d'ajustement de plusieurs ou de tous les facteurs d'influence sont normées en vue d'une meilleure possibilité de comparaison des paramètres, en ce sens que leur valeur minimale à ajuster $f_{min}$ soit à chaque fois choisie égale à une valeur numérique déterminée coïncidente - notamment 0 ou -1 - tandis que leur valeur d'ajustement maximale $f_{max}$ est choisie à chaque fois égale à une autre valeur numérique coïncidente, notamment +1.

**16.** Procédé selon la revendication 1, **caractérisé en ce que** pendant les mesures expérimentales, on mesure en même temps une ou plusieurs autres valeurs d'influence possibles, dans la mesure où il s'avère au cours de l'analyse des mesures, que ces valeurs d'influence possibles n'ont pas une influence négligeable, dans le cadre de la précision requise, sur une ou plusieurs valeurs cibles, et au moins ces valeurs d'influence supplémentaires non négligeables sont alors incluses en tant que facteurs d'influence dans la ou les fonctions mathématiques d'une ou plusieurs valeurs cibles.

**17.** Procédé selon l'une quelconque des revendications précédentes, **caractérisé en ce que** les valeurs cibles sont :

- le couple MD et/ou
- la température du catalyseur TKAT et/ou
- la température des gaz d'échappement TA.

**18.** Procédé selon l'une quelconque des revendications précédentes, **caractérisé en ce que** les facteurs d'influence sont :

- le régime DRZ et/ou
- la valeur lambda LAMA et/ou
- l'angle d'allumage ZWOUT et/ou
- la charge RLW et/ou
- la pression de charge moyenne PL.

*Abbildung 1: Einfluß der 23 Arbeitspunkte auf die Modellbildung*

*Abbildung 2: Abhängigkeiten der Ruß- und Stickoxid-Emissionen RUSSZ und NOx in g/h von Einspritzbeginn SB in °KW / Ladedruck PL in mbar / Lufttemperatur im Saugrohr TL in °C*

*Abbildung 3: Resultat der unterschiedlichen Modellansätze für das Stickoxid-Modell NOx bei Berücksichtigung von 21 Termen. Die tatsächlich verwendete Modellfunktion ist markiert.*

*Abbildung 4 Wirkung der Haupteinflußgrößen auf die Stickoxidemissionen NOx, mit 95% Vertrauensintervall*

*Abbildung 5: Einfluß der Modellterme auf die Stickoxidemission NOx*

*Abbildung 6: Stickoxidemission NOx in g/h in Abhängigkeit vom Spritzbeginn SB in °KW und Ladedruck PL in mbar, mit 95% Vertrauensintervall*

Abbildung 7: Kennfeld für den Kraftstoffdurchsatz KRSTDS, die Stickoxid- und die Rußemissionen NOx bzw. RUSSZ in Abhängigkeit vom Ladedruck PL in mbar und Einspritzbeginn SB in °KW bei Saugrohrlufttemperatur TL = 40 °C, Drehmoment MD = 30 Nm und Abgasrückführrate AGR = 80 %

<u>Experimentell</u>

<u>kontrollierbare</u>

<u>Einflußfaktoren:</u>

- Einspritzdüsenbauform DB

- Kraftstoffdruck FP

- Einspritzbeginn SB

- Abgasrückführrate AGR

- ...................

<u>Nicht</u>

<u>kontrollierbare</u>

<u>Einflußfaktoren:</u>

- Lufttemperatur vor

  dem Einlaßventil TL

- Temperatur des

  Kühlwassers TW

- ...................

**Motor**

<u>Zielgrößen $Z_i$:</u>

- Kraftstoffverbrauch KRSTDS

- Stickoxidemission NOx

- Rußemission RUSSZ

- Kohlenwasserstoffemission KW

- Motorvibrationen VIB

- ...........................

Modellgleichung (quadratischer Polynom-Ansatz):

$$Z_i = a_{i0} + a_{i1}*DB + a_{i2}*FP + a_{i3}*SB + ..... + a_{i11}*DB^2 + a_{i22}*FP^2 + a_{i33}*SB^2 + .........$$

$$+ a_{i12}*DB*FP + a_{i13}*DB*SB + ......... + a_{i23}*FP*SB + a_{i24}*FP*AGR$$

$$+ ........... + a_{i34}*SB*AGR + .........$$

Jedes $a_x$ erfordert mindestens einen Meßwert.

*Abbildung 8: zusammenfassende schematische Darstellung des Prinzips der erfinderischen Lösung einer beschleunigten Kennfeldwert- bzw. Parameterwertermittlung.*